# EUROPEAN PATENT SPECIFICATION

(11) **EP 2 537 014 B1**
(45) Date of publication and mention of the grant of the patent: **25.03.2015**
(21) Application number: 11704843.9
(22) Date of filing: 15.02.2011
(51) Int. Cl.: G01L 7/02, G01L 9/00, G01L 19/04

(54) **FLUID PRESSURE MONITORING APPARATUS**
FLÜSSIGKEITSDRUCKÜBERWACHUNGSGERÄT.
APPAREIL DE CONTRÔLE DE PRESSION DE FLUIDE

(30) Priority: 15.02.2010 GB 201002490
(43) Date of publication of application: 26.12.2012
(73) Proprietor: Smart Fibres Limited, Bracknell RG12 9BG (GB)
(72) Inventor: DOYLE, Crispin, Swindon SN1 5DU (GB); BOGDANOV, Oleg, Reading RG1 7PB (GB)
(74) Representative: Lord, Michael
(86) International application number: PCT/GB2011/050282
(87) International publication number: WO 2011/098838

(56) References cited:
- GB-A- 522 439
- US-A- 6 085 595

## Description

This invention relates to the monitoring of fluid pressure, particularly in high temperature, harsh environment applications such as downhole oil or gas wells.

Limitations of electrical sensor technologies at high temperatures have led to the emergence of Bragg grating based pressure transducers. A Bragg grating incorporated into an optical fibre known as a fibre Bragg grating (FBG), for example, gives rise to a periodic variation in the refractive index of the fibre. Light travelling down the fibre is partially reflected at each of the variations. These reflections interfere destructively at most wavelengths and the light continues to propagate down the fibre uninterrupted. However, at a particular narrow range of wavelengths, constructive interference occurs and reflected light is returned down the fibre. A FBG subjected to a stress and a resultant strain, for example, will cause the relative positions of the periodic variations in the refractive index of the fibre to change. As a result, the wavelength of the reflected light will be shifted, hence giving a signal associated with the strain, and therefore the stress experienced by the fibre.

WO2009/056623 and US-A-6233746 are examples of diaphragm strain based transducers. Such devices contain a diaphragm subjected to external pressure, and to which a FBG is attached. In response to applied pressure, the diaphragm deforms, and the FBG deforms accordingly, experiencing a strain, and thus creating a shift in a reflected signal from the optical fibre. However, such transducers have a number of limitations.

One limitation is the reduced number of options available for the mechanical interface between the fibre incorporating the FBG and the diaphragm as a result of the requirement not to mechanically constrain the diaphragm. Typically, an adhesive bond is used which can creep at elevated temperatures and lead to measurement drift.

Another limitation is that the strain in the fibre cannot exceed the elastic strain range of the diaphragm material, being significantly smaller than the elastic strain range of the fibre, so limiting the sensitivity and accuracy of the transducer.

Further, in order to maintain a constant strain along the FBG, which is desirable in order to avoid broadening of the FBG spectral profile, there is a lower limit to the diaphragm size since the radial diaphragm strain is not constant across the diaphragm. This limits the scope to miniaturise the sensor.

Further disadvantages of diaphragm strain based transducers include birefringence seen in the light reflected by the transducer caused by non-uniform loading of the FBG during the attachment of the FBG to the diaphragm, and further when the diaphragm is strained by external pressure. Such birefringence can lead to less accurate wavelength measurements and increase the cost and complexity required of the wavelength measuring apparatus associated with the transducer. There is also a limitation in the thickness to which the diaphragm can be machined.

US-A-2002/15486 shows the transducer with a FBG axially strained between ends of a sensing element. The fibre and FBG are encapsulated in a substantially cylindrical element and exposed to hydrostatic pressure. The design of the element converts this pressure into strain in the FBG. Because the sensor responds to hydrostatic pressure, two considerations must be addressed, both of which increase the complexity and hence the cost of the sensor. Firstly, it is difficult to form the pressure seals around the optical fibre in a manner which has long term stability. Secondly, the optical fibre and sensor element must be isolated from the process/well bore fluid by means of a pressure transfer fluid.

A well known pressure sensing device in other technical fields is the Bourdon tube, which deforms on application of a fluid under pressure. WO99/00652 describes a conventional curved Bourdon tube with a FBG held between the moving end and an immobile reference point. However, a Bourdon tube is subject to vibrations, giving inaccurate readings. Further, in order to correct for temperature-induced pressure changes, temperature compensation measurements must be carried out, which respond in exactly the same way to temperature as the FBG.

JP-A-03249531 describes a Bourdon tube pressure sensor with an optical fibre readout means, but the fibre is attached directly to and along the length of the curved Bourdon tube. This limits the strain experienced by the FBG to be the within the elastic strain range of the tube material, said elastic strain range being significantly less than the elastic strain range of the optical fibre. Consequently, the measurement sensitivity and accuracy of this measurement device is limited. Further, the method suffers from the birefringence disadvantages previously described, and also suffers with limited options available for attaching the fibre to the tube material, so limiting creep performance at elevated temperatures.

Further pressure sensors using a curved flattened Bourdon tube and electrical read out means are described in US-A-4279155 and EP-A-0083067, both of which require demodulation electronics at the sensor. As a result, neither of these methods is ideal for downhole use in high temperature, harsh environments.

US-6085595 discloses a high-range pressure sensor tube, containing a round bone eccentrically disposed parallel within the tube having one end open at which to receive fluid pressure.

There is thus the requirement to improve the accuracy and durability of pressure monitoring apparatuses for use in high temperature, harsh environments, and in particular pressure monitoring apparatuses which use a fibre Bragg grating.

### Summary of the Invention

In accordance with a first aspect of the present invention, a fluid pressure monitoring apparatus comprises:
an elongated member, having a free end and a fixed end;
a blind bore extending through the elongated member and having an opening through which fluid is provided to the bore when in use, and wherein the bore is offset from a central axis of the elongated member such that the elongated member deflects in response to the pressure of the fluid when provided to the bore; and
a sensing device adapted to sense the change in distance between a first position, and a second position, in response to the deflection of the elongated member.

The sensing device comprises an optical transmission means extending between the first position and the second position, the optical transmission means containing a Bragg grating, the Bragg grating experiencing a strain as a result of the change in distance between the first and second positions. Preferably, the first position is located on a rigid body, and the second position located on the second member, although they are not constrained to these positions. Further, the optical transition transmission means is preferably an optical fibre and the Bragg grating is a fibre Bragg grating (FBG), although the optical transmission means could be any waveguide.

Here the first and second positions are at two independent locations before the deflection of the elongated member, and the change in distance between the first and second positions is measured as the displacement of the second position from its original position in response to the deflection of the elongated member, the first position being fixed. This displacement is measured by a strain or displacement sensor positioned between the first and second positions.

Advantageously, the geometry and dimensions of such a monitoring apparatus, for example the cross section and length of the elongated member, can be independently adjusted to vary the sensitivity and/or pressure rating of the monitoring apparatus according to the needs of the application. Further, the maximum pressure the sensing device can sustain before yielding can be varied by controlling the thickness of the elongated member around the bore.

Preferably, the elongated member is deflected in a bending manner, brought about as a result of dissimilar strains experienced by the wall sections of the elongated member on opposing sides of the bore.

In a favoured embodiment, the fluid pressure monitoring apparatus further comprises a second member attached to the elongated member, wherein the second position is located on the second member, the term "on" including within.

Advantageously, the addition of the second member with the second position located on said second member decreases the distance L between the first and second positions and increases the change ΔL in said distance resulting from applied fluid pressure, compared to the situation where the second position is located on the elongated member. This amplification effect of the displacement ΔL and gross amplification effect of the strain ΔL/L allows for greater sensitivity and accuracy of the fluid pressure monitoring apparatus.

Preferably, the second member is adapted so that the movement of the second position with respect to the first position, in response to the deflection of the elongated member, is defined along a substantially linear axis. This configuration allows for greater accuracy in the measurement of the change in distance between the first and second positions. It is envisaged that the movement of the second position is substantially parallel to the central axis of the elongated member. However, by changing the location of the first position, the movement of the second position, located on the second member, can be substantially perpendicular to the central axis of the elongated member.

The FBG can be either a reflective or transmissive type. In addition other optical fibre gratings can be used, such as long-period fibre gratings. These long period gratings are simpler to manufacture than FBGs due to their longer period, although resonances can only be observed in transmission spectra.

Advantageously, the optical fibre may be mechanically fixed to at least one rigid part of the pressure monitoring apparatus at a position or positions wherein the mechanical fixation does not influence the pressure sensitivity of the apparatus, and such mechanical fixation is made at a location or locations on the optical fibre where the FBG is not positioned. By avoiding fixation of the FBG in this way, this embodiment allows for more robust fixation methods to be employed than can be used for FBG diaphragm based transducers, so overcoming the limitations of creep described above for such devices. Further, this embodiment benefits from significantly reduced birefringence compared with a diaphragm based transducer, since the FBG itself is not mechanically fixed or subject to asymmetric loading.

Further embodiments may employ an electrical strain transducer, an electrical displacement transducer, a piezoresistive element, or a resonant quartz force-transducing element as the sensing device adapted to sense the change in distance between the first and second positions.

Advantageously, the second member may be adapted such that a part of the second member experiences a substantially zero internal strain in response to the deflection of the elongated member. This allows an additional strain sensor to be mounted to a part of the second member, which will only respond to temperature-induced changes in strain. This provides a means for compensating for the effects of changes in temperature on the change in distance between the first and second positions. A substantially zero internal strain may be experienced at locations distal from the bore.

An alternative means for compensating for the effects of changes in temperature can be provided by employing an identical, second pressure monitoring apparatus located in close proximity to the first pressure monitoring apparatus so as to form a fluid pressure monitoring system, wherein the bore of the second pressure monitoring apparatus is not exposed to the fluid pressure. In this way, the two pressure monitoring apparatuses respond identically to temperature, and the difference in the responses of the two apparatuses represents the temperature compensated pressure response of the first apparatus.

The materials of the elongated member and the second member are preferably creep-resistant so as to reduce measurement drift. Further, it is envisaged that the elongated member and the second member may be conveniently formed as a unitary member.

Furthermore, the fixed end of the elongated member may be fixed to a rigid body, and wherein the rigid body and the elongated member are formed as a single member.

Preferably, the elongated member has a length of a few tens of millimetres and a constant, rectangular cross section. However, it will be appreciated that the elongated member can have different lengths and/or cross sections.

Similarly the cross section of the bore is preferably circular for ease of manufacture and for minimising strain concentrations; however other cross sections can be used.

Preferably, the materials used in the fluid pressure monitoring apparatus are strong and highly resistant to creep, including but not limited to stainless steels, nickel-based superalloys and maraging steels.

In some cases, when the fluid pressure monitoring apparatus is in use, the bore is sealed and substantially filled with a substantially non-compressible fluid, the bore being in pressure communication with the environment external to the fluid pressure monitoring apparatus such that the elongated member deflects in response to the pressure of the fluid in the external environment. Here, a pressure transfer membrane such as a bellows sealing the open end of the bore can provide the pressure communication with the external environment.

It is envisaged that the fluid pressure monitoring apparatus is defined within a housing to protect the apparatus, and in particular the sensing device, from the external environment. The housing may be separate to the rigid body or the rigid body itself may define the housing. Typical pressures and temperatures in oil or gas wells which the apparatus may have to withstand can be up to and in excess of 2000 bar and 350 degrees Centigrade,

Some examples of the present invention will now be described with reference to the accompanying drawings, in which:
FIG. 1 shows a fluid pressure monitoring apparatus in accordance with a first example of the present invention;
FIG. 2 shows a second example of the fluid pressure monitoring apparatus; and
FIG. 3 shows a flowchart outlining how such a fluid pressure monitoring apparatus may be used.

Each of the examples now described is a fluid pressure monitoring apparatus for use in an oil or gas well environment.

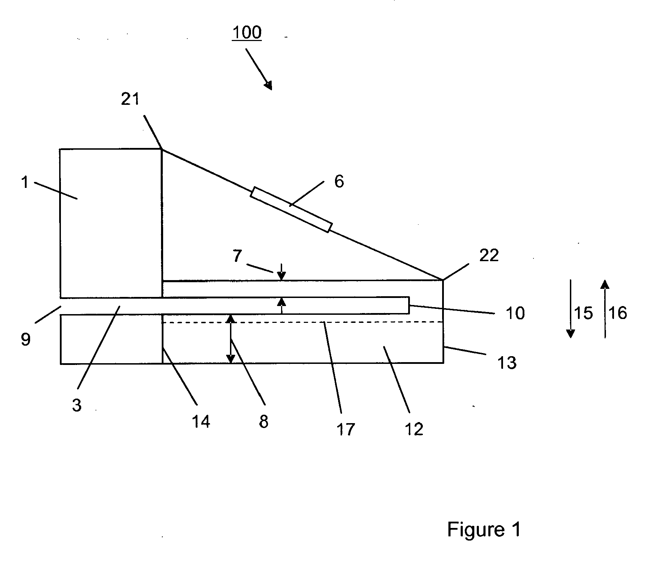

FIG. 1 illustrates a fluid pressure monitoring apparatus 100 comprising a rigid body 1 attached to an elongated member 12. The elongated member 12 has a free end 13 and a fixed end 14, the fixed end 14 being attached to the rigid body 1. The rigid body 1 and the elongated member 12 can be attached as separate members or formed as a unitary member.

A blind bore 3 of circular cross section extends through the rigid body 1 and along the elongated member 12 such that the closed end of the bore 10 is contained within the elongated member 12, and the blind bore 3 provides an open end 9 to which fluid can be applied. The part of the elongated member through which the bore 3 passes has a substantially constant cross section. In FIG. 1, the open end 9 is located on an outer surface of the rigid body 1.

The blind bore 3 is positioned so that it is offset from a central axis 17 of the elongated member 12, so as to define wall sections 7 and 8 of the elongated member 12 of differing thicknesses. Here, differing thicknesses means that at least one of the dimensions of wall section 7 differs from the corresponding dimension of wall section 8. In FIG. 1, wall section 8 is thicker than wall section 7. Typical dimensions for the section thicknesses 7, 8 are 0.5 and 2.5 millimetres respectively.

In FIG. 1 the offset of the bore 3 with respect to the central axis 17 of the elongated member 12 is in the vertical plane. It will be appreciated that the offset can be in any other plane with respect to the central axis, although some modifications to the position of the other elements discussed below may be preferable as a result.

On application of pressurised fluid (for example having a pressure of up to and in excess of 2000 bar) into the bore 3, the pressure of the fluid will cause a differing strain to be experienced in the wall sections 7 and 8 of the elongated member 12. In the case of FIG. 1, the strain experienced by wall section 7 will be greater than the strain experienced by wall section 8, thus causing the elongated member to bend in a direction shown by arrow 15. It will be appreciated that the bore can be positioned offset from the central axis 17 of the elongated member such that the wall section 7 is thicker than wall section 8. In such an example, the elongated member will then bend in a direction shown by arrow 16.

As a result of the bending of the elongated member 12, the distance between a first position 21 and a second position 22 will increase. A sensing device 6 located between the first position 21 and the second position 22 is provided to sense the change in distance between the first and second positions. This is preferably measured as a strain, here defined as ΔL/L where ΔL is the change in the original distance between the first position 21 and second position 22, L. The strain experienced by the sensing device is a function of the pressure of the fluid, thus a strain reading derived from the sensing device can be calibrated to give a measurement for the fluid pressure.

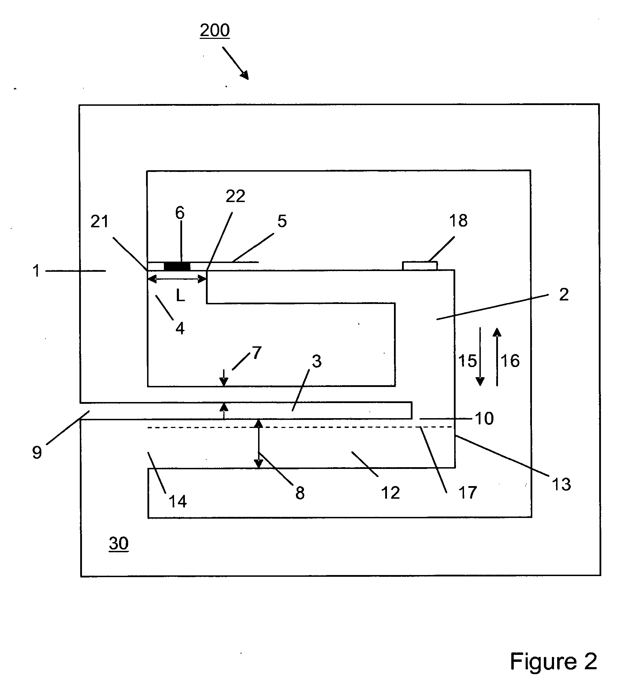

FIG. 2 shows a second example of the present invention. Analogous elements of those discussed in the first example are given similar reference numerals. A fluid pressure monitoring apparatus 200 is shown, comprising an elongated member 12 having a free end 13 and fixed end 14, the fixed ends being attached to a rigid body 1. Here the rigid body defines a housing 30 around the apparatus, although it will be appreciated that the housing may be formed separate to the rigid body 1. The housing 30 is able to withstand the external environment conditions. A blind bore 3 extends through the elongated member 12 and the rigid body 1, the closed end of the bore 10 being contained within the elongated member 12, and the opening of the bore 9 located on a surface of the rigid body 1.

A second member 2 is shown attached to the elongated member 12. In this diagram, the second member 2 is shown attached to the end of the elongated member 12, although it is appreciated that the second member could be attached at any position along the said elongated member 12.

Although the terms "elongated member", "second member" and "rigid body" are used for clarity of explanation, in a practical apparatus the elongated and second members or indeed those and the rigid body may be formed as unitary articles.

In this second example, the second member 2 defines an "L shape", such that the elongated member 12 and the second member 2 together form a "U shape", defining a gap 4 between substantially opposing faces of the rigid body 1 and the second member 2. It will be understood that the shape of the second member is not limited to such an "L shape", and any shape of the second member can be used so as to define a gap 4 between a first position 21 and a second position 22. Indeed, the distance between the first 21 and second 22 positions in FIG. 1 is defined as a gap, in a similar way. In this embodiment, the first position 21 is positioned on a surface of the rigid body and the second position 22 is located on the second member 2.

The blind bore 3 is offset from a central axis 17 of the elongated member 12 so as to create a thick wall section 8 and a thin wall section 7 of the elongated member 12. Due to this differing wall thickness, when a fluid is applied into the bore 3, due to the pressure of the fluid, dissimilar internal strains are experienced in the thin wall section 7 and the thick wall section 8 of the elongated member 12, causing the elongated member 12 to bend in a direction shown by arrow 15. Specifically in FIG. 2, the internal strain experienced by wall section 7 is greater than the external strain experienced by wall section 8. This bending of the elongated member 12 will cause the distance between the first 21 and the second 22 positions (here labelled as "L") to increase.

Again, it is understood that the bore 3 can be positioned such that the wall section 7 is thicker than wall section 8 so as to cause the elongated member to bend in a direction by arrow 16, thus causing the distance L to decrease.

A sensing device 6 located between the first and second positions experiences a strain caused by the change in distance between the first 21 and second 22 positions. In this embodiment, a Fibre Bragg grating (FBG) contained within an optical fibre 5 is used to measure strain caused by the change in distance between the first 21 and second 22 positions. However, any form of waveguide can be used, including a doped silicon dioxide waveguide formed in a silicon substrate, wherein the fibre Bragg grating is replaced by a waveguide Bragg grating.

A first part of the optical fibre is attached to the rigid body 1 (at the first position 21) and a second part attached to the second member 2 (at the second position 22). The optical fibre is positioned so as to span the gap 4 such that a change in dimension of the gap 4 will create a strain in the FBG, hence causing a shift in the wavelength of light reflected by the FBG down the optical fibre. The change in strain measured across the gap 4 (here strain is defined as ΔL/L where ΔL is the change in original length L of the gap 4) is associated with the applied pressure of the fluid.

It is to be understood that the optical fibre could be attached in any configuration such that the FBG is located between the first 21 and second 22 positions.

Other sensing devices to sense the change in distance between the first 21 and second 22 positions can be used, including but not limited to electrical strain or displacement transducers, piezoresistive elements, and resonant quartz force-transducing elements. In the case of the FBG and the optical fibre, since at least one of the first and second parts of the optical fibre is attached to rigid parts of the fluid pressure monitoring apparatus 200 at locations where the FBG is not positioned, such attachment can be made by more robust means than are available with, for example, FBG diaphragm based transducers. This overcomes the creep limitations seen in FBG diaphragm based transducers where the FBG is attached by less robust means to the non-rigid diaphragm. This improvement is further enhanced if the elongated member 12 and second member 2 are formed from a material highly resistant to creep.

Further, in the case of the FBG and the optical fibre, this embodiment benefits from significantly reduced birefringence compared with a FBG diaphragm based transducer, since the FBG itself is not mechanically fixed.

In this embodiment, at least one part of the second member 2 experiences substantially zero internal strain as a result of the bending of the elongated member 12 on application of fluid into the bore 3. This allows a second sensing device 18 to be attached to a part of the second member 2, the second sensing device 18 thus able to sense temperature dependent strains rather than strains caused by the pressure of the fluid in the bore 3. This allows strains measured by sensing device 6 to be corrected for temperature effects.

An alternative means for compensating for the effects of changes in temperature can be provided by employing a second, identical pressure monitoring apparatus located in close proximity to the first pressure monitoring apparatus, wherein the bore of the second monitoring sensing apparatus is not exposed to the fluid pressure. In this way, the two pressure monitoring apparatuses respond identically to temperature, and the difference in the responses of the two apparatuses represents the temperature compensated pressure response of the first apparatus.

As with the device 6, examples of sensing device 18 include but are not limited to an FBG, electrical strain or displacement transducers, piezoresistive elements, and resonant quartz force transducing elements. In the case of device 18 being an FBG, advantageously, device 18 would be affixed to the apparatus in the same way as device 6 so that the two devices respond to temperature in a similar manner, so minimising errors in the use of device 18 to provide temperature compensation to device 6.

In this embodiment, the gap 4 is defined so that the second position 22 moves with respect to the first position 21 along a substantially linear axis, and substantially parallel to the central axis 17 of the elongated member 12. It will be understood that this does not necessarily have to be the case, and the second position 22 may move relative to the first position 21 along an axis substantially perpendicular to the central axis 17 of the elongated member, or indeed move along a substantially non-linear axis. Further, the first 21 and second 22 positions are not constrained to the points shown in this diagram, and are positionally unconstrained.

In this embodiment, the rigid body 1, the elongated member 12, and the second member 2, are all formed as a unitary member in order to have the strongest, most stable joins between the separate components. This does not necessarily have to be the case, and the components can be attached as separate members. Further, in this embodiment the cross section of the elongated member 12 is rectangular, and the cross section of the bore 3 is circular, although it is understood that any suitable cross sections can be used.

In a further embodiment (not shown) the bore 3 is sealed and substantially filled with a substantially non-compressible fluid, with the bore 3 being in pressure communication with the environment external to the fluid pressure monitoring apparatus. It is envisaged that this external environment could be a downhole oil well. A pressure transfer membrane sealing the open end of the bore 3 provides the pressure communication with the external environment. The pressure transfer membrane is a diaphragm in this case. The provision of a sealed bore ensures that the bore does not become clogged by foreign matter during use, and further allows the elongated member to be manufactured from preferred, stronger materials that may not be compatible with the external process fluid.

Materials that are appropriate for the elongated member 12 and second member 2 are those with high strength and low creep. Appropriate materials include, but are not limited to, stainless steels, nickel alloy steels and maraging steels.

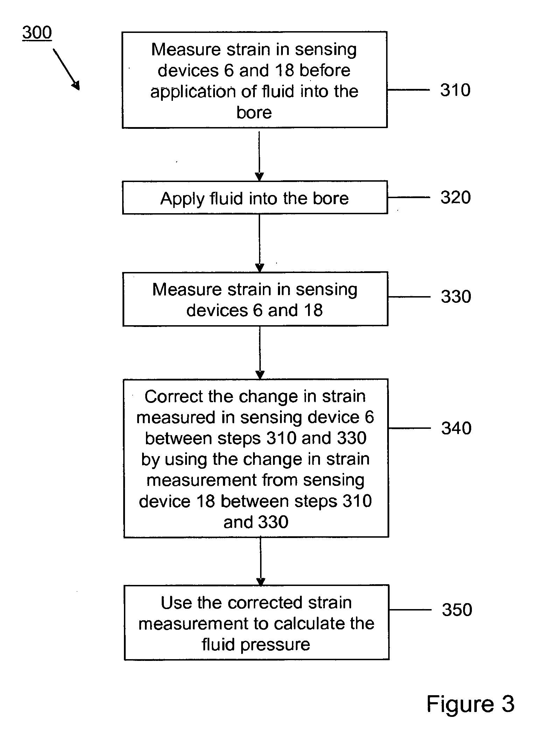

FIG. 3 depicts a flowchart 300 outlining how a fluid pressure monitoring apparatus such as those described above may be used.

In a first step 310, prior to the application of pressurised fluid into the bore, the strains measured by sensing devices 6 and 18 are recorded. This gives a calibration measurement for the sensors 6 and 18. An earlier calibration will also have been performed to record the strains monitored by the devices 6 an 18 as a function of pressure applied to the bore 3 and temperature.

Fluid is then applied to the bore 3, shown by step 320, by positioning the apparatus in a hydrocarbon well at a measurement location.

In step 330, the strain across the gap 4 after the application of the fluid at depth in the well is measured by sensing device 6. The strain experienced by sensing device 18 is also measured (this also having been calibrated previously). Any change in strain measured by sensing device 18 is due to factors other than the pressure of the fluid, since the part of the second member on which the sensor 18 is located experiences substantially zero strain as a result of the deflection of the elongated beam. Essentially, the strain in the device 18 is due to the thermal expansion of the material.

In step 340, the change in strain measured by sensing device 6 between step 310 and step 330 is corrected for by taking into account the change in strain measured by sensing device 18 between the same steps. The corrected change in strain experienced by sensing device 6 across the gap 4 is then used to determine the pressure of the fluid in the bore, according to a predetermined relationship.

It will be appreciated that other methods of using the pressure monitoring apparatus to measure the pressure of the applied fluid can be applied.

## Claims

1. A fluid pressure monitoring apparatus (100) for use in harsh environments such as in an oil or gas well environment, comprising;
an elongated member (12), having a free end (13) and a fixed end (14);
a blind bore (3) extending through the elongated member (12) and having an opening through which fluid is provided to the bore (3) when in use, and wherein the bore (3) is offset from a central axis of the elongated member (12) such that the elongated member (12) deflects in response to the pressure of the fluid when provided to the bore (3);
a sensing device (6,18) comprising an optical waveguide containing a Bragg grating, the sensing device (6) being adapted to sense the change in distance between a first position (21), and a second position (22), in response to the deflection of the elongated member (12), and wherein the sensing device (6) further comprises a second member (2) attached to said elongated member (12), wherein the second position (22) is located on the second member (2) and further wherein the second member (2) is adapted so that the movement of the second position (22) on the second member (2) with respect to the first position (21), in response to the deflection of the elongated member (12), is defined along a substantially linear axis;
the fluid pressure monitoring apparatus (100) further comprising a housing (30) for protecting the apparatus from the said environment and adapted such that the fluid within the bore (3) when in use is in pressure communication with the said environment.

2. The fluid pressure monitoring apparatus (100) of claim 1, wherein the first position (21) and the second position (22) are at two independent locations before the deflection of the elongated member (12); and the change in distance between the first position (21) and the second position (22) is measured as the displacement of the second position (22) from its original position in response to the deflection of the elongated member (12), the first position (21) being fixed.

3. The fluid pressure monitoring apparatus (100) of claim 1 or claim 2, wherein the elongated member (12) is deflected in a bending manner.

4. The fluid pressure monitoring (100) apparatus of any of claims 1 to 3, wherein the elongated member (12) is deflected as a result of dissimilar strains experienced by the wall sections of the elongated member (12) on opposing sides of the bore (3).

5. The fluid pressure monitoring apparatus (100) of any of the preceding claims, further wherein the movement of the second position (22) is substantial parallel to the central axis of the elongated member (12).

6. The fluid pressure monitoring apparatus (100) of any of the preceding claims, wherein the second member (2) is adapted such that a part of the second member (2) experiences a substantially zero internal strain as a result of the said deflection of the elongated member (12).

7. The fluid pressure monitoring apparatus (100) of any of the preceding claims, wherein the second member (2) is formed from a material highly resistant to creep.

8. The fluid pressure monitoring apparatus (100) of any of the preceding claims, wherein the elongated member (12) and the second member are formed as a unitary member.

9. The fluid pressure monitoring apparatus (100) of any of the preceding claims, wherein the fixed end (14) of said elongated member (12) is fixed to a rigid body (1), wherein the rigid body (1) and the elongated member (12) are formed as a unitary member and wherein the first position (21) is located on the rigid body (1).

10. The fluid pressure monitoring apparatus (100) of any of the preceding claims, wherein when in use the bore (3) is sealed and substantially filled with a substantially non-compressible fluid, the bore (3) being in pressure communication with the environment external to the fluid pressure monitoring apparatus (100), such that the elongated member (12) deflects in response to the pressure of a fluid in the external environment.

11. The fluid pressure monitoring apparatus (100) of claim 10, further comprising a pressure transfer membrane which seals the open end of the bore (3) and provides pressure communication between the bore (3) and the external environment.

12. The fluid pressure monitoring apparatus (100) of any of the preceding claims, wherein the sensing device (6,18) comprises an optical transmission means extending between the first position (21) and the second position (22), said optical transmission means is an optical fibre containing a Fibre Bragg grating (FBG) located between the first (21) and second position (22).

13. The fluid pressure sensing apparatus (100) of any of claims 1 to 11, wherein the optical waveguide extends between the first position (21) and the second position (22), said waveguide containing a waveguide Bragg grating located between the first (21) and second positions (22).

14. The fluid pressure monitoring apparatus (100) of any of the preceding claims, further comprising a further sensing device located on one surface of the second member (2) for measuring temperature dependent strain within the second member (2).

15. A fluid pressure monitoring system (100) comprising a first fluid pressure monitoring apparatus (100) according to any of the preceding claims, and a second pressure monitoring apparatus (100) that is not subject to pressure, so as to allow temperature compensation of the first pressure monitoring apparatus (100).

## Patentansprüche

1. Flüssigkeitsdrucküberwachungsgerät (100) zur Verwendung in rauen Umgebungen, wie beispielsweise in einer Öl- oder Gasumgebung, umfassend;
ein längliches Element (12) mit einem freien Ende (13) und einem festen Ende (14);
eine Blindbohrung (3), die sich durch das längliche Element (12) hindurch erstreckt und eine Öffnung aufweist durch welche, wenn in Gebrauch, der Bohrung (3) Flüssigkeit bereitgestellt wird und, wobei die Bohrung (3) von einer mittigen Achse des länglichen Elements (12) versetzt ist, derartig, dass das längliche Element (12) als Reaktion auf den Druck der Flüssigkeit ausgelenkt wird, wenn diese der Bohrung (3) bereitgestellt wird;
Abtastungsvorrichtung (6, 18), die einen optischen Wellenleiter mit einem Bragg-Gitter umfasst, wobei die Abtastungsvorrichtung (6) angepasst ist, die Abstandsänderung zwischen einer ersten Position (21), und einer zweiten Position (22), als Reaktion auf die Auslenkung des länglichen Elements (12) zu fühlen und, wobei die Abtastungsvorrichtung (6) ferner ein zweites Element (2) umfasst, das am länglichen Element (12) angebracht ist, wobei sich die zweite Position (22) am zweiten Element (2) befindet und ferner, wobei das zweite Element (2) so angepasst ist, dass die Bewegung der zweiten Position (22) am zweiten Element (2) in Bezug auf die erste Position (21), als Reaktion auf die Auslenkung des länglichen Elements (12) entlang einer im Wesentlichen linearen Achse definiert ist;
wobei das Flüssigkeitsdrucküberwachungsgerät (100) ferner ein Gehäuse (30) zum Schutz des Geräts vor der Umgebung umfasst und derartig angepasst ist, dass die Flüssigkeit innerhalb der Bohrung (3), wenn in Gebrauch, in Flüssigkeitsverbindung mit der Umgebung ist.

2. Flüssigkeitsdrucküberwachungsgerät (100) nach Anspruch 1, wobei die erste Position (21) und die zweite Position (22) zwei unabhängige Orte vor der Auslenkung des länglichen Elements (12) sind und die Abstandsänderung zwischen der ersten Position (21) und der zweiten Position (22) als die Verlagerung der zweiten Position (22) aus ihrer ursprünglichen Position als Reaktion auf die Auslenkung des länglichen Elements (12) gemessen wird, wobei die erste Position (21) fest ist.

3. Flüssigkeitsdrucküberwachungsgerät (100) nach Anspruch 1 oder Anspruch 2, wobei das längliche Element (12) auf eine biegende Weise ausgelenkt wird.

4. Flüssigkeitsdrucküberwachungsgerät (100) nach einem beliebigen der Ansprüche 1 bis 3, wobei das längliche Element (12) als ein Ergebnis ungleicher Dehnungen ausgelenkt wird, welche die Wandabschnitte des länglichen Elements (12) auf entgegengesetzten Seiten der Bohrung (3) erfahren.

5. Flüssigkeitsdrucküberwachungsgerät (100) nach einem beliebigen der vorangehenden Ansprüche, wobei ferner die Bewegung der zweiten Position (22) im Wesentlichen parallel zur mittigen Achse des länglichen Elements (12) geschieht.

6. Flüssigkeitsdrucküberwachungsgerät (100) nach einem beliebigen der vorangehenden Ansprüche, wobei das zweite Element (2) derartig angepasst ist, dass ein Teil des zweiten Elements (2) eine innere Dehnung von wesentlich Null als ein Ergebnis der Auslenkung des länglichen Elements (12) erfährt.

7. Flüssigkeitsdrucküberwachungsgerät (100) nach einem beliebigen der vorangehenden Ansprüche, wobei das zweite Element (2) aus einem Material mit hohem Widerstand gegen Kriechen gebildet ist.

8. Flüssigkeitsdrucküberwachungsgerät (100) nach einem beliebigen der vorangehenden Ansprüche, wobei das längliche Element (12) und das zweite Element aus einem einheitlichen Element gebildet sind.

9. Flüssigkeitsdrucküberwachungsgerät (100) nach einem beliebigen der vorangehenden Ansprüche, wobei das feste Ende (14) des länglichen Elements (12) an einen starren Körper (1) befestigt ist, wobei der starre Körper (1) und das längliche Element (12) als ein einheitliches Element gebildet sind und, wobei sich die erste Position (21) am starren Körper (1) befindet.

10. Flüssigkeitsdrucküberwachungsgerät (100) nach einem beliebigen der vorangehenden Ansprüche, wobei, wenn in Gebrauch, die Bohrung (3) abgedichtet und im Wesentlichen mit einer nicht komprimierbaren Flüssigkeit gefüllt wird, wobei die Bohrung (3) in Druckverbindung mit der Umgebung ist, die extern zum Flüssigkeitsdrucküberwachungsgerät (100) ist, derartig, dass das längliche Element (12) als Reaktion auf den Druck einer Flüssigkeit in der externen Umgebung auslenkt.

11. Flüssigkeitsdrucküberwachungsgerät (100) nach Anspruch 10, das ferner eine Druckübertragungsmembrane umfasst, die das offene Ende der Bohrung (3) abdichtet und Druckverbindung zwischen der Bohrung (3) und der externen Umgebung bereitstellt.

12. Flüssigkeitsdrucküberwachungsgerät (100) nach einem beliebigen der vorangehenden Ansprüche, wobei die Abtastungsvorrichtung (6, 18) ein optisches Übertragungsmittel umfasst, das sich zwischen der ersten Position (21) und der zweiten Position (22) erstreckt, wobei das optische Übertragungsmittel eine optische Faser ist, die ein Faser-Bragg-Gitter (FBG) enthält, das sich zwischen den ersten (21) und zweiten Positionen (22) befindet.

13. Flüssigkeitsdrucküberwachungsgerät (100) nach einem beliebigen der Ansprüche 1 bis 11, wobei sich der optischen Wellenleiter zwischen der ersten Position (21) und der zweiten Position (22) erstreckt, wobei der Wellenleiter ein Wellenleiter-Bragg-Gitter enthält, das sich zwischen den ersten (21) und zweiten Positionen (22) befindet.

14. Flüssigkeitsdrucküberwachungsgerät (100) nach einem beliebigen der vorangehenden Ansprüche, das ferner eine weitere Abtastungsvorrichtung umfasst, die sich auf einer Oberfläche des zweiten Elements (2) zum Messen der temperaturabhängigen Dehnung innerhalb des zweiten Elements (2) befindet.

15. Flüssigkeitsdrucküberwachungsgerät (100), das ein erstes Flüssigkeitsdrucküberwachungsgerät (100) übereinstimmend mit einem beliebigen der vorangehenden Ansprüche und ein zweites Drucküberwachungsgerät (100) umfasst, das keinem Druck unterliegt, um Temperaturkompensation des ersten Drucküberwachungsgeräts (100) zuzulassen.

## Revendications

1. Appareil de surveillance de la pression de fluide (100) destiné à une utilisation dans des environnements rigoureux, par exemple dans un environnement de puits de gaz ou de pétrole, comprenant :
un élément allongé (12), avec une extrémité libre (13) et une extrémité fixe (14);
un alésage borgne (3) se prolongeant à travers l'élément allongé (12) et avec une ouverture à travers laquelle du fluide est fourni à l'alésage (3) au cours de l'utilisation, et cas dans lequel l'alésage (3) est décalé par rapport à un axe central de l'élément allongé (12) de sorte que l'élément allongé (12) fléchisse en réaction à la pression du fluide lorsqu'il est fourni à l'alésage (3) ;
un dispositif détecteur (6, 18) comportant un guide d'onde optique contenant un réseau de Bragg, le dispositif détecteur (6) étant conçu pour détecter le changement en termes de distance entre une première position (21) et une seconde position (22) en réaction à la déflexion de l'élément allongé (12), et cas dans lequel l'élément détecteur (6) comprend en outre un second élément (2) lequel est attaché audit élément allongé (12), cas dans lequel la seconde position (22) est située sur le second élément (2) et en outre cas dans lequel le second élément (2) est conçu de sorte que le mouvement de la seconde position (22) sur le second élément (2) par rapport à la première position (21), en réaction à la déflexion de l'élément allongé (12), est défini le long d'un axe sensiblement linéaire ;
l'appareil de surveillance de la pression de fluide (100) comprenant en outre un logement (30) pour protéger l'appareil contre ledit environnement, et conçu de telle sorte que le fluide à l'intérieur de l'alésage (3), pendant l'utilisation, est en communication de pression avec ledit environnement.

2. Appareil de surveillance de la pression de fluide (100) selon la revendication 1, la première position (21) et la seconde position (22) se trouvant en deux emplacements indépendants avant la déflexion de l'élément allongé (12) ; et le changement en termes de distance entre la première position (21) et la seconde position (22) étant mesuré comme étant le déplacement de la seconde position (22) à partir de sa position initiale, en réaction à la déflexion de l'élément allongé (12), la première position (21) étant fixe.

3. Appareil de surveillance de la pression de fluide (100) selon la revendication 1 ou la revendication 2, l'élément allongé (12) étant défléchi suivant une manière de ployage.

4. Appareil de surveillance de la pression de fluide (100) selon l'une quelconque des revendications 1 à 3, l'élément allongé (12) étant défléchi en conséquence de contraintes dissemblables que subissent les sections de paroi de l'élément allongé (12) sur des côtés opposés de l'alésage (3).

5. Appareil de surveillance de la pression de fluide (100) selon l'une quelconque des revendications précédentes, en outre le mouvement de la seconde position (22) étant sensiblement parallèle à l'axe central de l'élément allongé (12).

6. Appareil de surveillance de la pression de fluide (100) selon l'une quelconque des revendications précédentes, le second élément (2) étant conçu de sorte qu'une partie du second élément (2) est soumise à une contrainte interne essentiellement nulle en conséquence de ladite déflexion dudit élément allongé (12).

7. Appareil de surveillance de la pression de fluide (100) selon l'une quelconque des revendications précédentes, le second élément (2) étant formé à partir d'un matériau qui est hautement résistant au fluage.

8. Appareil de surveillance de la pression de fluide (100) selon l'une quelconque des revendications précédentes, l'élément allongé (12) et le second élément étant formés en tant qu'élément unitaire.

9. Appareil de surveillance de la pression de fluide (100) selon l'une quelconque des revendications précédentes, l'extrémité fixe (14) dudit élément allongé (12) étant fixée à un corps rigide (1), cas dans lequel le corps rigide (1) et l'élément allongé (12) sont formés en tant qu'élément unitaire et la première position (21) étant située sur le corps rigide (1).

10. Appareil de surveillance de la pression de fluide (100) selon l'une quelconque des revendications précédentes, lors de son utilisation l'alésage (3) étant scellé et sensiblement rempli d'un fluide sensiblement non compressible, l'alésage (3) étant en communication de pression avec l'environnement externe par rapport à l'appareil de surveillance de la pression de fluide (100), de sorte que l'élément allongé (12) fléchisse en réaction à la pression d'un fluide dans l'environnement externe.

11. Appareil de surveillance de la pression de fluide (100) selon la revendication 10, comprenant en outre une membrane de transfert de pression qui assure le scellement de l'extrémité ouverte de l'alésage (3) et procure une communication de pression entre l'alésage (3) et l'environnement externe.

12. Appareil de surveillance de la pression de fluide (100) selon l'une quelconque des revendications précédentes, le dispositif détecteur (6, 18) comprenant des moyens de transmission optique lesquels se prolongent entre la première position (21) et la seconde position (22), lesdits moyens de transmission optique se présentant sous la forme d'une fibre optique contenant un réseau de Bragg à fibres (FBG) lequel est positionné entre la première (21) et la seconde positions (22).

13. Appareil de détection de la pression de fluide (100) selon l'une quelconque des revendications 1 à 11, le guide d'onde optique se prolongeant entre la première position (21) et la seconde position (22), ledit guide d'onde contenant un réseau de Bragg de guide d'onde lequel est positionné entre la première (21) et la seconde positions (22).

14. Appareil de surveillance de la pression de fluide (100) selon l'une quelconque des revendications précédentes, comprenant en outre un dispositif détecteur supplémentaire lequel est positionné sur une surface du second élément (2) pour mesurer une contrainte tributaire de la température à l'intérieur du second élément (2).

15. Système de surveillance de la pression de fluide (100) comprenant un premier appareil de surveillance de la pression de fluide (100) selon l'une quelconque des revendications précédentes, et un second appareil de surveillance de la pression (100) qui n'est pas soumis à la pression, de sorte à permettre une compensation thermique du premier appareil de surveillance de la pression (100).
